(19) **Europäisches Patentamt**
European Patent Office
Office européen des brevets

(11) **EP 1 789 666 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: **05770237.5**

(22) Anmeldetag: **27.07.2005**

(51) Int Cl.:
**F02D 41/24** *(2006.01)*

(86) Internationale Anmeldenummer:
**PCT/DE2005/001341**

(87) Internationale Veröffentlichungsnummer:
**WO 2006/029586 (23.03.2006 Gazette 2006/12)**

(54) **VERFAHREN ZUM BETRIEB EINER BRENNKRAFTMASCHINE**

METHOD FOR OPERATING AN INTERNAL COMBUSTION ENGINE

PROCEDE POUR FAIRE FONCTIONNER UN MOTEUR A COMBUSTION INTERNE

(84) Benannte Vertragsstaaten:
**DE FR**

(30) Priorität: **17.09.2004 DE 102004045215**

(43) Veröffentlichungstag der Anmeldung:
**30.05.2007 Patentblatt 2007/22**

(73) Patentinhaber: **Conti Temic microelectronic GmbH**
**90411 Nürnberg (DE)**

(72) Erfinder:
• **HAGEL, Reinhold**
**91361 Pinzberg (DE)**
• **TUNA, Mehmet**
**90765 Fürth (DE)**

(74) Vertreter: **Büchner, Jörg**
**Conti Temic microelectronic GmbH**
**Sieboldstr. 19**
**90411 Nürnberg (DE)**

(56) Entgegenhaltungen:
DE-A1- 3 825 749     DE-A1- 4 418 731
DE-A1- 10 044 412     DE-A1- 10 235 665
US-B1- 6 397 112

• PATENT ABSTRACTS OF JAPAN Bd. 011, Nr. 339 (M-639), 6. November 1987 (1987-11-06) & JP 62 121846 A (FUJI HEAVY IND LTD), 3. Juni 1987 (1987-06-03)
• PATENT ABSTRACTS OF JAPAN Bd. 2000, Nr. 25, 12. April 2001 (2001-04-12) & JP 2001 207895 A (TOYOTA MOTOR CORP), 3. August 2001 (2001-08-03)

EP 1 789 666 B1

**Beschreibung**

Die Erfindung betrifft ein Verfahren nach dem Oberbegriff des Anspruchs 1.

Ein Verfahren zur Regelung der Betriebsweise einer Brennkraftmaschine ist aus der DE 102 35 665 A1 bekannt. Abhängig vom aktuellen Betriebszustand der Brennkraftmaschine wird ein zylinderspezifischer Korrekturfaktor ermittelt, anhand dessen die Menge und der Zeitpunkt des in diesen Zylinder einzuspritzenden Kraftstoffs bestimmt wird. Das beschriebene Verfahren eignet sich gut zur Laufruheregelung der Brennkraftmaschine. Alterungseffekte, die sich insbesondere bei häufig wiederkehrenden Betriebszuständen (= Betriebspunkte) der Brennkraftmaschine bemerkbar machen, können gut und zylinderspezifisch ausgeregelt werden. Verbesserungswürdig ist das Verfahren dagegen für selten auftretende Betriebszustände.

In der DE 100 44 412 A1 sind eine Vorrichtung und ein Verfahren zur Adaption von Kennfeldwerten in Steuergeräten, insbesondere für die Kraftstoffeinspritzung bei Brennkraftmaschinen und Kraftfahrzeugen oder Motorrädern beschrieben. Es werden bei Vorliegen einer Regelabweichung die dieser Regelabweichung zugeordneten Adaptionswerte als Parameter in einem Korrekturkennfeld abhängig vom aktuellen Betriebspunkt abgelegt. Insbesondere sind, wenn sich der aktuelle Betriebspunkt zwischen den Stützstellen des nächstliegenden Flächenstücks des Korrekturkennfeldes befindet, die Adaptionswerte diesen benachbarten Stützstellen zugeordneten Parameter, durch die die Regelabweichung proportional zu den relativen Abständen des Betriebspunktes zu diesen Stützstellen auf diese Stützstellen aufgeteilt.

Die Aufgabe der Erfindung besteht deshalb darin, ein Verfahren der gattungsgemäßen Art anzugeben, mittels dessen ein sicherer und effizienter Betrieb der Brennkraftmaschine auch bei selten auftretenden Betriebszuständen möglich ist.

Zur Lösung dieser Aufgabe wird ein Verfahren entsprechend den Merkmalen des Patentanspruchs 1 angegeben. Angepasst wird in dem Korrekturfaktorkennfeld nicht nur der Gitterkorrekturfaktor, der unmittelbar für den aktuellen Betriebspunkt hinterlegt ist, sondern auch weitere Gitterkorrekturfaktoren, die für diskrete Betriebspunkte zumindest in einem gewissen Umfeld um den aktuellen Betriebspunkt hinterlegt sind. Der Abstand vom aktuellen Betriebspunkt, innerhalb dessen die Anpassung der Gitterkorrekturfaktoren vorgenommen wird, kann nach Bedarf gewählt werden. Möglich sind dabei auch die beiden Extremfälle, bei denen entweder nur die Gitterkorrekturfaktoren der unmittelbar benachbarten diskreten Betriebspunkte oder alle Gitterkorrekturfaktoren angepasst werden. Das erfindungsgemäße Verfahren gewährleistet, dass auch Gitterkorrekturfaktoren von diskreten Betriebspunkten, in denen sich die Brennkraftmaschine selten oder im Extremfall sogar nie befindet, angepasst werden, wenn bei häufiger auftretenden Betriebspunkten ein verändertes Verhalten der Brennkraftmaschine oder zumindest des betreffenden Zylinders festgestellt wird. Gelangt die Brennkraftmaschine dann beispielsweise erstmalig in einen derartigen seltenen Betriebspunkt, kann der zugehörige Gitterkorrekturfaktor aufgrund der beschriebenen Wechselwirkung dennoch bereits an ein geändertes Verhalten angepasst worden sein. Bei dem erfindungsgemäßen Verfahren wird also für seltene Betriebszustände auf Informationen, die bei häufig auftretenden Betriebszuständen gewonnen werden, zurückgegriffen. Dadurch ergibt sich auch bei den selten auftretenden Betriebszuständen ein sicherer und effizienter Betrieb der Brennkraftmaschine. Das Verfahren bietet den Vorteil, dass das Verfahren funktionsfähig bleibt, auch wenn der aktuelle Betriebspunkt nicht genau gleich einem der diskreten Betriebspunkte des Korrekturfaktor- und Häufigkeitskennfeldes ist. Durch die Berücksichtigung der Häufigkeit des aktuellen Betriebspunkts und die Gitterhäufigkeit des diskreten Betriebspunkts, kann ein unverhältnismäßig hoher Einfluss von nur selten auftretenden Betriebszuständen vermieden werden. Häufig auftretende Betriebszustände erhalten dagegen eine höhere Bedeutung, da der Informationsgehalt des zugehörigen (Gitter-) Korrekturfaktors aufgrund des häufigen Auftretens eine hohe statistische Sicherheit aufweist und weitgehend unabhängig von zufälligen extremen Schwankungen ist. Aufgrund der Berücksichtigung der Häufigkeiten wird die Sicherheit des Verfahrens insgesamt erhöht.

Vorteilhafte Ausgestaltungen des erfindungsgemäßen Verfahrens ergeben sich aus den von Anspruch 1 abhängigen Ansprüchen.

Die gemäß Anspruch 2 vorgesehene Differenz zwischen dem Momentan-Korrekturfaktor und dem interpolierten Korrekturfaktor führt außerdem zu einer Art von Tiefpass-Filterung oder Integration des Momentan-Korrekturfaktors. Sehr starke und auch sprunghafte Änderungen im Momentan-Korrekturfaktor werden dadurch nur zum Teil und auch nur mit einer gewissen Verzögerung berücksichtigt. Dies trägt zur Stabilität des Verfahrens bei.

Die Maßnahme gemäß Anspruch 3 stellt sicher, dass sowohl die hinterlegten Gitterkorrekturfaktoren als auch die hinterlegten Häufigkeitsfaktoren jeweils auf dem aktuellst möglichen Stand gehalten werden.

Bei der Variante nach Anspruch 4 wird verhindert, dass eine Gitterhäufigkeit einen durch die hard- und/oder softwaretechnische Realisierung vorgegebenen maximalen Zahlenwert erreicht und danach nicht mehr weiter angehoben werden kann, wodurch zumindest die Häufigkeitsanalyse und gegebenenfalls sogar das komplette Verfahren fehlerhaft arbeiten oder komplett ausfallen könnte.

Die Maßnahme gemäß Anspruch 5 ermöglicht von Anfang an definierte Verhältnisse, so dass das Verfahren auch bei erstmaligem Rückgriff auf einen hinterlegten diskreten Betriebszustand fehlerfrei arbeitet.

Anhand der gemäß Anspruch 6 vorgesehenen optionalen Gewichtung lässt sich die Fernwirkung eines für den aktuellen Betriebszustand ermittelten Momentan-Korrekturfaktors auf die Gitterkorrekturfaktoren und die Gitterhäufigkeiten der jeweiligen diskreten Betriebspunkte mit einem noch höheren Justierungsgrad einstellen. Insbesondere sinkt die Beeinflussung mit zunehmendem Abstand vom aktuellen Betriebspunkt. Die Gewichtung erfolgt beispielsweise mittels eines konstanten multiplikativen Gewichtungsfaktors. Sie kann jedoch auch eine funktionale Abhängigkeit, insbesondere eine exponentielle Abhängigkeit, vom Abstand beinhalten.

Die Ausgestaltungen nach den Ansprüchen 7 und 8 ermöglichen eine einfache und auch leicht zu realisierende Anpassung der Gitterkorrekturfaktoren bzw. der Gitterhäufigkeiten.

Weitere Merkmale, Vorteile und Einzelheiten der Erfindung ergeben sich aus der nachfolgenden Beschreibung eines Ausführungsbeispiels anhand der Zeichnung. Es zeigt:

Fig. 1     eine mittels eines Steuergeräts betreibbare Brennkraftmaschine, wobei das Steuergerät eine Kennfeldeinheit mit anpassbarem Korrekturfaktorkennfeld und anpassbarem Häufigkeitskennfeld umfasst, und

Fig. 2     das Korrekturfaktorkennfeld und das Häufigkeitskennfeld, die gemäß Fig. 1 in der Kennfeldeinheit hinterlegt sind, in vergrößerter Darstellung.

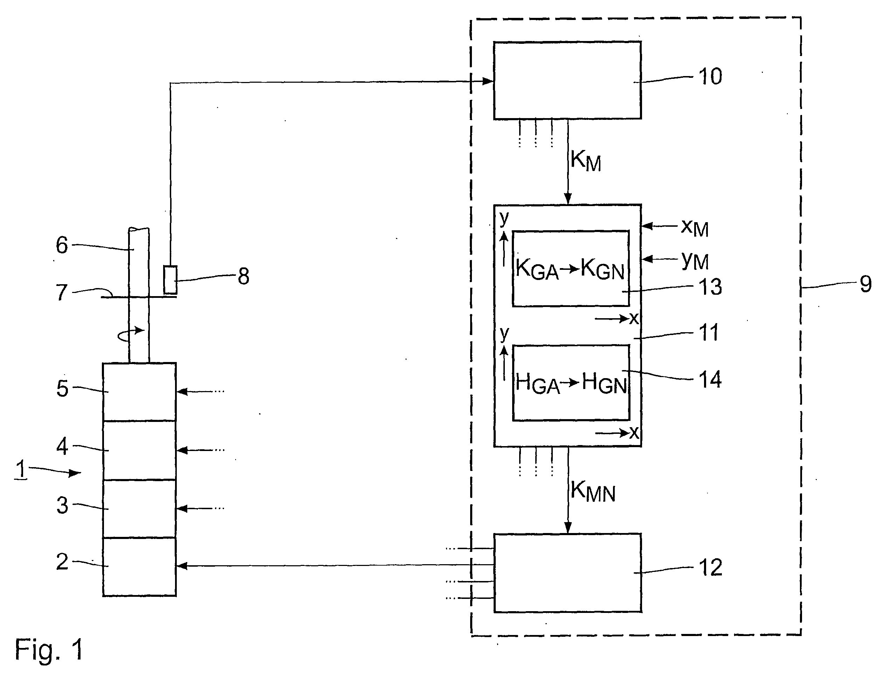

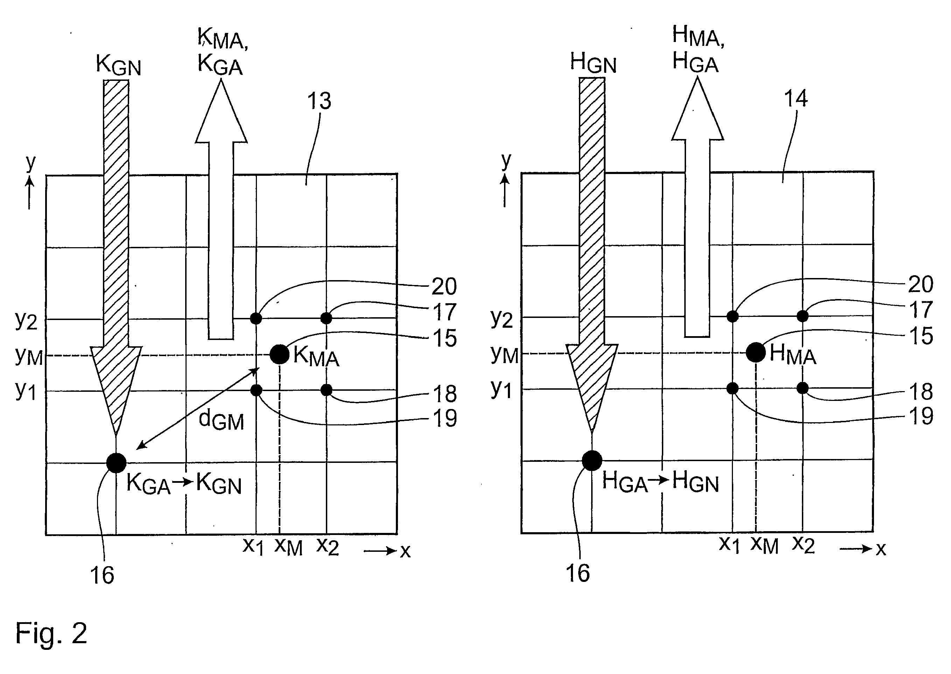

Einander entsprechende Teile sind in den Fig. 1 und 2 mit denselben Bezugszeichen versehen.

In Fig. 1 ist eine Ausführungsbeispiel einer insbesondere selbstzündenden Brennkraftmaschine 1, die vier Zylinder 2, 3, 4 und 5 und eine Welle 6 aufweist, dargestellt. Die Zylinderanzahl ist nur exemplarisch zu verstehen. Andere Zylinderanzahlen sind ebenfalls möglich. An der Welle 6, beispielsweise der Kurbelwelle, der Brennkraftmaschine 1 ist ein Geberrad 7 angebracht, das über den Umfang verteilt, äquidistant Markierungen aufweist. Diese im Ausführungsbeispiel nicht näher gezeigten Markierungen können in Form von Zähnen oder auch Löchern ausgebildet sein. Ein dem Geberrad 7 zugeordneter Sensor 8, beispielsweise in Gestalt eines Induktivgebers, ist an ein zum Betrieb der Brennkraftmaschine 1 ausgelegtes Steuergerät 9 angeschlossen. Der Sensor 8 liefert ein Drehzahlsignal, wenn sich eine der Markierungen des Geberrads 7 an ihm vorbeibewegt. Dieses Drehzahlsignal wird dem Steuergerät 9 zugeführt.

Das Steuergerät 9 umfasst neben anderen nicht dargestellten Einheiten eine Drehzahlsignal-Auswerteeinheit 10, eine Kennfeldeinheit 11 sowie eine Einspritzeinheit 12. In der Kennfeldeinheit 11 sind ein Korrekturfaktorkennfeld 13 und ein Häufigkeitskennfeld 14, die beide zur Anpassung während des Betriebs der Brennkraftmaschine 1 ausgelegt sind, in einem nicht näher gezeigten Speicher hinterlegt.

Die genannten Einheiten 10 bis 12 des Steuergeräts 9 können physikalisch getrennt, beispielsweise als gesonderte elektronische Baugruppen oder auch zu einer einzigen physikalischen Einheit zusammengefasst vorliegen. Letzteres ist insbesondere im Fall einer programmtechnischen Realisierung der Einheiten 10 bis 12 auf einem Signalprozessor möglich. Ebenso denkbar ist eine Mischform.

Im Folgenden wird unter Bezugnahme auf Fig. 1 und 2 die Funktionsweise des Steuergeräts 9, insbesondere der Kennfeldeinheit 11, sowie das daraus resultierende Verfahren zum Betrieb der Brennkraftmaschine 1 näher beschrieben.

Aus dem von dem Sensor 8 gelieferten Drehzahlsignal wird in der Drehzahlsignal-Auswerteeinheit 10 ein Momentan-Korrekturfaktor $K_M$ ermittelt. Der Momentan-Korrekturfaktor $K_M$ ist zylinderspezifisch und dient zur genauen Festlegung des Startzeitpunkts und der Menge des in den Zylinder 2 letztendlich mittels der Einspritzeinheit 12 eingespritzten Kraftstoffs. Die Drehzahlsignal-Auswerteeinheit 10 erzeugt für jeden der Zylinder 2 bis 5 einen derartigen Momentan-Korrekturfaktor $K_M$. Beispielhaft wird in Fig. 1 und 2 nur auf den Momentan-Korrekturfaktor $K_M$ des Zylinders 2 Bezug genommen. Die Art und Weise seiner Ermittlung ist an sich bekannt. Eine Möglichkeit wird in der DE 102 35 665 A1 beschrieben.

Der Momentan-Korrekturfaktor $K_M$ ist eine Eingangsgröße der Kennfeldeinheit 11, der außerdem auch Informationen über einen aktuellen Betriebspunkt 15 (= Betriebszustand) der Brennkraftmaschine 1 zugeführt werden. Im Ausführungsbeispiel wird der Betriebszustand durch eine erste Zustandsgröße x, die eine mittlere Last der Brennkraftmaschine 1 angibt, und eine zweite Zustandsgröße y, die eine mittlere Drehzahl der Brennkraftmaschine 1 wiedergibt, gekennzeichnet. Der aktuelle Betriebspunkt 15 wird durch Momentan-Zustandsgrößen $x_M$ und $y_M$ bestimmt, die beide ohnehin im Steuergerät 9 der Brennkraftmaschine 1 verfügbar sind.

Anhand der genannten Eingangsgrößen wird das Korrekturfaktorkennfeld 13 und das Häufigkeitskennfeld 14 zumindest teilweise adaptiert (= aktualisiert). Danach wird unter Rückgriff auf das aktualisierte Korrekturfaktorkennfeld 13 ein aktualisierter Korrekturfaktor $K_{MN}$ erzeugt und der Einspritzeinheit 12 als maßgebliche Größe zur Nachregelung der Einspritzung in den Zylinder 2 zugeführt.

Im Folgenden wird unter Bezugnahme auf Fig. 2 die Anpassung des Korrekturfaktorkennfelds 13 und des Häufigkeitskennfelds 14 näher beschrieben. Beide Kennfelder 13 und 14 sind jeweils als Rasterkennfeld ausgebildet, welches eine regelmäßige, d. h. äquidistante Verteilung der Gitterpunkte (= Stützstellen) aufweist, und anhand dessen eine nicht lineare Funktion oder ein analytisch nicht darstellbarer Zusammenhang in diskreter, also abgetasteter Form leicht abgebildet werden kann. Die abgetastete zweidimensionale Grundfläche der beiden Kennfelder 13 und 14 wird durch die beiden Zustandsgrößen x und y aufgespannt.

Vor der Anpassung sind im Korrekturfaktorkennfeld 13 für diskrete Betriebspunkte, die jeweils durch ein einem Gitterpunkt zugeordnetes Wertepaar der Zustandsgrößen x und y bestimmt sind, bisherige Gitterkorrekturfaktoren $K_{GA}$ hinterlegt. Im Häufigkeitskennfeld 14 sind vor der Anpassung für dieselben diskreten Betriebspunkte bisherige Gitterhäufigkeiten $H_{GA}$, die Maßzahlen dafür wiedergeben, wie oft der zugehörige diskrete Betriebszustand bislang aufgetreten ist, hinterlegt.

Das anfangs überall mit dem gleichen Einheitswert, beispielsweise mit einer Eins, belegte Korrekturfaktorkennfeld 13 ermöglicht es, dem durch Alterungseffekte bedingten zeitvarianten Verhalten des zugehörigen Zylinders 2 Rechnung zu tragen, indem die bisherigen Gitterkorrekturfaktoren $K_{GA}$ in vorgebbaren Zeitabständen angepasst werden. Im Ausführungsbeispiel erfolgen diese Anpassungen andauernd, also ohne Zwischenpausen zwischen zwei aufeinanderfolgenden Anpassungszyklen. Grundsätzlich sind Zwischenpausen mit einer in weiten Grenzen variierenden Zeitdauer möglich.

Gitterkorrekturfaktoren, die nach einer derartigen Anpassung im Korrekturfaktorkennlinienfeld 13 hinterlegt sind, werden als aktualisierte Gitterkorrekturfaktoren $K_{GN}$ bezeichnet. Bevorzugt werden während eines Anpassungszyklusses sowohl die bisherigen Gitterkorrekturfaktoren $K_{GA}$ als auch die bisherigen Gitterhäufigkeiten $H_{GA}$ zusammen angepasst. Dementsprechend werden also Gitterhäufigkeiten, die nach der Anpassung im Häufigkeitskennfeld 14 hinterlegt sind, als aktualisierte Gitterhäufigkeiten $H_{GN}$ bezeichnet.

Bei der Anpassung eines beispielhaft gewählten diskreten Betriebspunkts 16 werden der bisherige Gitterkorrekturfaktor $K_{GA}$, die Differenz zwischen dem Momentan-Korrekturfaktor $K_M$ und einem für den aktuellen Betriebspunkt 15 mittels gewisser bisheriger Korrekturfaktoren $K_{GA}$ interpolierten Korrekturfaktor $K_{MA}$, eine Häufigkeit $H_{MA}$ des aktuellen Betriebspunkts 15, die bisherige Gitterhäufigkeit $H_{GA}$ des diskreten Betriebspunkts 16 sowie ein Abstand $d_{GM}$ zwischen dem aktuellen Betriebspunkt 15 und dem diskreten Betriebspunkt 16 berücksichtigt. Weiterhin kann der zuletzt genannte Abstand $d_{GM}$ zusätzlich mit einem multiplikativen Gewichtungsfaktor $\delta$ versehen sein, um die Fernwirkung des Momentan-Korrekturfaktors $K_M$ auf die bisherigen Gitterkorrekturfaktoren $K_{GA}$ zu steuern.

Für die Ermittlung des Abstands $d_{GM}$ wird im Ausführungsbeispiel das euklidische Abstandsmaß verwendet. Grundsätzlich sind jedoch auch andere Abstandsmaße, wie z. B. das Manhattan-Abstandsmaß, möglich.

Wie in Fig. 2 anhand der nach außen gerichteten nichtschraffierten Pfeile angedeutet werden den Kennfeldern 13 und 14 Informationen entnommen, die sich auf die tatsächlich mit Daten belegten diskreten Betriebspunkte, aber auch auf den aktuellen Betriebspunkt 15 beziehen. Der aktuelle Betriebspunkt 15 fällt nur ausnahmsweise mit einem diskreten Betriebspunkt zusammen, so dass die für den aktuellen Betriebspunkt 15 entnehmbaren Informationen aus den Daten von vier benachbarten diskreten Betriebspunkten 17, 18, 19 und 20 interpoliert werden.

Auf diese Weise lassen sich der interpolierte Korrekturfaktor $K_{MA}$ und die Häufigkeit $H_{MA}$ des aktuellen Betriebspunkts 15 ermitteln. Die Vorgehensweise ist für beide Größen gleich. Es wird jeweils eine Interpolationsfunktion f

$$f(x, y) = a_1 + a_2 x + a_3 y + a_4 xy \qquad (1)$$

verwendet, wobei die Interpolationsfunktion f stellvertretend für den Korrekturfaktor und die Häufigkeit steht. Mit $a_1$, $a_2$, $a_3$ und $a_4$ sind zunächst unbekannte konstante Faktoren bezeichnet. Anstelle der Interpolationsfunktion f von Gleichung (1) können auch andere Interpolationsfunktionen zum Einsatz kommen.

Mit den im Kennfeld 13 oder 14 für die vier benachbarten diskreten Betriebspunkten 17 bis 20 hinterlegten bisherigen Gitterkorrekturfaktoren $K_{GA}$ bzw. bisherigen Gitterhäufigkeiten $H_{GA}$ als den Stützstellenwerten der Interpolationsfunktion f und mit den die benachbarten diskreten Betriebspunkte 17 bis 20 definierenden Zustandsgrößen $x_1$, $x_2$, $y_1$ und $y_2$ ergibt sich das folgende lineare Gleichungssystem:

$$\begin{bmatrix} f(x_1, y_1) \\ f(x_2, y_1) \\ f(x_1, y_2) \\ f(x_2, y_2) \end{bmatrix} = \begin{bmatrix} 1 & x_1 & y_1 & x_1 y_1 \\ 1 & x_2 & y_1 & x_2 y_1 \\ 1 & x_1 & y_2 & x_1 y_2 \\ 1 & x_2 & y_2 & x_2 y_2 \end{bmatrix} \begin{bmatrix} a_1 \\ a_2 \\ a_3 \\ a_4 \end{bmatrix} \qquad (2)$$

Dieses lineare Gleichungssystem wird nach dem Vektor der unbekannten Faktoren $a_1$ bis $a_4$ aufgelöst. Mittels

der so bestimmten Faktoren $a_1$ bis $a_4$ und der Momentan-Zustandsgrößen $x_M$ und $y_M$ lässt sich dann anhand von Gleichung (1) der gesuchte interpolierte Korrekturfaktor $K_{MA}$ bzw. die gesuchte Häufigkeit $H_{MA}$ des aktuellen Betriebspunkts 15 ermitteln.

Grundsätzlich kann diese Ermittlung jedoch auch ohne Lösung eines linearen Gleichungssystems, wie es in Gleichung (2) beschrieben ist, erfolgen. Entscheidend für die interpolierende Ermittlung der interessierenden Grö-ßen ist der Abstand des aktuellen Betriebspunkts 15 von den benachbarten diskreten Betriebspunkten 17 bis 20. Deshalb kann eine Transformation der Zustandsgrößen x und y auf transformierte Zustandsgrößen u und v dergestalt vorgenommen werden, dass $x_1$ auf $u_1=0$, $x_2$ auf $u_2=1$, $y_1$ auf $v_1=0$ sowie $y_2$ auf $v_2=1$ abgebildet wird. Setzt man diese transformierten Zustandsgrößen $u_1$, $u_2$, $v_1$ und $v_2$ der diskreten Betriebspunkte 17 bis 20 in die Interpolationsfunktion f gemäß Gleichung (1) ein, lassen sich die unbekannten Faktoren $a_1$ bis $a_4$ in einfacher Weise berechnen. Mit den dem Kennfeld 13 oder 14 für die vier diskreten Betriebspunkte 17 bis 20 entnommenen Stützstellen:

$$f(x_1, y_1) = f(u_1, v_1) = f(0,0)$$

$$f(x_2, y_1) = f(u_2, v_1) = f(1,0)$$

$$f(x_1, y_2) = f(u_1, v_2) = f(0,1)$$

$$f(x_2, y_2) = f(u_2, v_2) = f(1,1)$$

ergeben sich die vier unbekannten Faktoren unmittelbar zu:

$$a_1 = f(0,0)$$

$$a_2 = f(1,0) - f(0,0)$$

$$a_3 = f(0,1) - f(0,0)$$

$$a_4 = f(1,1) + f(0,0) - f(1,0) - f(0,1)$$

Eine weitere Möglichkeit zur Ermittlung des interpolierten Korrekturfaktors $K_{MA}$ beziehungsweise der Häufigkeit $H_{MA}$ des aktuellen Betriebspunkts 15 ergibt sich, wenn anstelle der vier benachbarten diskreten Betriebspunkte 17 bis 20 nur drei benachbarte diskrete Betriebspunkte verwendet werden. Dabei werden gerade die diskreten Betriebspunkte ausgewählt, die die Eckpunkte desjenigen Dreiecks bilden, innerhalb dessen der aktuelle Betriebspunkt 15 angeordnet ist. Bei dieser triangulären Interpolation kommt dementsprechend eine Interpolationsfunktion f zum Einsatz, die im Unterschied zur Gleichung (1) nur drei unbekannte Faktoren aufweist, so dass sich der Aufwand für die Ermittlung der interpolierten Größen reduziert.

Nach der Ermittlung des interpolierten Korrekturfaktors $K_{MA}$ und der Häufigkeit $H_{MA}$ des aktuellen Betriebspunkts 15 erfolgt die Anpassung der bisherigen Gitterkorrekturfaktoren $K_{GA}$ und der bisherigen Gitterhäufigkeiten $H_{GA}$ zu den jeweils korrespondierenden aktualisierten Gitterkorrekturfaktoren $K_{GN}$ bzw. zu den aktualisierten Gitterhäufigkeiten $H_{GN}$ mittels der Gleichungen:

$$K_{GN} = K_{GA} + \frac{H_{MA}}{(1 + \delta \cdot d_{GM})H_{GA}}(K_M - K_{MA}) \qquad (3)$$

$$H_{GN} = H_{GA} + \frac{1}{(1 + \delta \cdot d_{GM})} \qquad (4)$$

Diese Anpassung erfolgt für alle oder zumindest für die innerhalb einer bestimmten Umgebung des aktuellen Betriebspunkts 15 befindlichen diskreten Betriebspunkte der Kennfelder 13 und 14. Stellvertretend ist in Fig. 2 der diskrete Betriebspunkt 16 wiedergegeben.

Eine so ermittelte aktualisierte Gitterhäufigkeit $H_{GN}$ wird einer Überlaufkorrektur unterzogen. Hierzu wird zunächst der Mittelwert über alle aktualisierten Gitterhäufigkeiten $H_{GN}$ gebildet. Ist dieser Mittelwert größer als ein vorzugebender maximaler Grenzwert wird die Differenz des Mittelwerts zum maximalen Grenzwert gebildet und von jeder der aktualisierten Gitterhäufigkeiten $H_{GN}$ abgezogen, außer die jeweilige aktualisierte Gitterhäufigkeit $H_{GN}$ würde dann unterhalb eines ebenfalls vorzugebenden unteren Grenzwerts liegen. Andere Überlaufkorrekturen sind ebenfalls möglich.

Das beschriebene Verfahren bewirkt, dass weit vom aktuellen Betriebspunkt 15 entfernte diskrete Betriebspunkte 20 geringer beeinflusst werden als näher gelegene diskrete Betriebspunkte 20. Darüber hinaus geht eine Information mit umso höherem Gewicht in die Anpassung ein, je häufiger der zugehörige Betriebspunkt bisher aufgetreten ist, also je sicherer diese Information ist. Außerdem wird durch die beschriebene Fernwirkung gewährleistet, dass auch selten oder nie auftretende Betriebspunkte eine Anpassung an ein verändertes Verhalten der Brennkraftmaschine 1 erfahren.

Nach der Anpassung des Korrekturfaktorkennfelds 13 wird für den aktuellen Betriebspunkt 15 mittels der Gleichungen (1) und (2) der aktualisierte Korrekturfaktor $K_{MN}$ bestimmt und der nachfolgenden Einspritzeinheit 12 als Eingangsgröße zur Verfügung gestellt.

**Patentansprüche**

1. Verfahren zum Betrieb einer Brennkraftmaschine (1) mit mehreren Zylindern (2, 3, 4, 5), in die jeweils eine Einspritzung von Kraftstoff erfolgt, bei dem

   a) für einen aktuellen, durch zwei Zustandsgrößen ($x_M$, $y_M$) der Brennkraftmaschine (1) definierten Betriebspunkt (15) mittels eines gemessenen Drehzahlsignals einer Welle (6) der Brennkraftmaschine (1) ein Momentan-Korrekturfaktor ($K_M$) für die Einspritzung in einen der Zylinder (2, 3, 4, 5) ermittelt wird,
   b) mittels des Momentan-Korrekturfaktors ($K_M$) zumindest ein Teil von in einem Korrekturfaktorkennfeld (13) für diskrete Betriebspunkte (16) der Brennkraftmaschine (1) hinterlegten Gitterkorrekturfaktoren ($K_{GA}$) angepasst wird, wobei
   c) ein Abstand ($d_{GM}$) zwischen dem aktuellen Betriebspunkt (15) und dem diskreten Betriebspunkt (16) des jeweils anzupassenden Gitterkorrekturfaktors ($K_{GA}$) bei der Anpassung der Gitterkorrekturfaktoren ($K_{GA}$) berücksichtigt wird,
   d) mittels nach der Anpassung im Korrekturfaktorkennfeld (13) hinterlegter aktualisierter Gitterkorrekturfaktoren ($K_{GN}$) ein aktualisierter Korrekturfaktor ($K_{MN}$) für den aktuellen Betriebspunkt (15) bestimmt wird und der aktualisierte Korrekturfaktor ($K_{MN}$) für die Einspritzung verwendet wird,
   **dadurch gekennzeichnet, dass**
   e) bei der Anpassung der Gitterkorrekturfaktoren ($K_{GA}$) eine Häufigkeit ($H_{MA}$) des aktuellen Betriebspunkts (15) und eine in einem diskreten Häufigkeitskennfeld (14) hinterlegte Gitterhäufigkeit ($H_{GA}$) des diskreten Betriebspunkts (16) des jeweils anzupassenden Gitterkorrekturfaktors ($K_{GA}$) berücksichtigt werden, wobei die Gitterhäufigkeiten Masszahlen dafür wiedergeben, wie oft der zugehörige diskrete Betriebszustand bislang aufgetreten ist.
   f) dass die Häufigkeit ($H_{MA}$) des aktuellen Betriebspunkts (15) mittels der Gitterhäufigkeiten ($H_{GA}$) der zum aktuellen Betriebspunkt (15) benachbarten diskreten Betriebspunkte (17, 18, 19, 20) interpoliert wird.

2. Verfahren nach Anspruch 1, **dadurch gekennzeichnet, dass** für den aktuellen Betriebspunkt (15) mittels der Gitterkorrekturfaktoren ($K_{GA}$) der zum aktuellen Betriebspunkt (15) benachbarten diskreten Betriebspunkte (17, 18, 19, 20) ein interpolierter Korrekturfaktor ($K_{MA}$) ermittelt und bei der Anpassung der Gitterkorrekturfaktoren ($K_{GA}$), in Form einer Differenz zwischen dem Momentan-Korrekturfaktor ($K_M$) und dem interpolierten Korrekturfaktor ($K_{MA}$), berücksichtigt wird.

3. Verfahren nach Anspruch 1, **dadurch gekennzeichnet, dass** die Gitterhäufigkeiten ($H_{GA}$) der jeweiligen diskreten Betriebspunkte (16) in einem gleichen Adaptionszyklus wie die Gitterkorrekturfaktoren ($K_{GA}$) angepasst werden.

4. Verfahren nach Anspruch 3, **dadurch gekennzeichnet, dass** nach der Anpassung vorliegende aktualisierte Gitterhäufigkeiten ($H_{GN}$) einer Überlaufkorrektur unterzogen werden.

5. Verfahren nach Anspruch 1, **dadurch gekennzeichnet, dass** die Gitterkorrekturfaktoren ($K_{GA}$) anfangs mit einem einheitlichen Wert vorbelegt werden.

6. Verfahren nach Anspruch 1, **dadurch gekennzeichnet, dass** der Abstand ($d_{GM}$) zwischen dem aktuellen Betriebspunkt (15) und dem diskreten Betriebspunkt (16) des jeweils anzupassenden Gitterkorrekturfaktors ($K_{GA}$) insbesondere mittels eines multiplikativen Gewichtungsfaktors ($\delta$) gewichtet wird.

7. Verfahren nach Anspruch 1, **dadurch gekennzeichnet, dass** der Gitterkorrekturfaktor ($K_{GA}$) des jeweiligen diskreten Betriebspunkts (16) entsprechend der Gleichung:

$$K_{GN} = K_{GA} + \frac{H_{MA}}{(1 + \delta \cdot d_{GM})H_{GA}}(K_M - K_{MA})$$

angepasst wird, wobei $K_{GN}$ einen aktualisierten Gitterkorrekturfaktor des jeweiligen diskreten Betriebspunkts (16), $K_{GA}$ einen bis zur Anpassung im Korrekturfaktorkennfeld (13) hinterlegten bisherigen Gitterkorrekturfaktor des jeweiligen diskreten Betriebspunkts (16), $H_{MA}$ eine Häufigkeit des aktuellen Betriebspunkts (15), $H_{GA}$ eine bis zur Anpassung im diskreten Häufigkeitskennfeld (14) hinterlegte bisherige Gitterhäufigkeit des jeweiligen diskreten Betriebspunkts (16), $d_{GM}$ den Abstand zwischen dem aktuellen Betriebspunkt (15) und dem jeweiligen diskreten Betriebspunkt (16), $\delta$ einen Gewichtungsfaktor, $K_M$ den Momentan-Korrekturfaktor und $K_{MA}$ einen interpolierten Korrekturfaktor bezeichnet.

8. Verfahren nach Anspruch 7, **dadurch gekennzeichnet, dass** die bisherige Gitterhäufigkeit ($H_{GA}$) des jeweiligen diskreten Betriebspunkts (16) entsprechend der Gleichung:

$$H_{GN} = H_{GA} + \frac{1}{(1 + \delta \cdot d_{GM})}$$

angepasst wird, wobei $H_{GN}$ eine aktualisierte Gitterhäufigkeit des jeweiligen diskreten Betriebspunkts (16) bezeichnet.

**Claims**

1. A method for operating an internal combustion engine (1) comprising several cylinders (2, 3, 4, 5) into each of which fuel is injected, in which

   a) a measured rotational speed signal of a shaft (6) of the internal combustion engine (1) is used to determine a momentary correction factor ($K_M$) for injection into one of the cylinders (2, 3, 4, 5) for a current operating point (15) that is defined by two parameters ($x_M$, $y_M$) of the internal combustion engine (1),
   b) the momentary correction factor ($K_M$) is used to adjust at least a part of grid correction factors ($K_{GA}$) that are stored in a characteristic diagram of correction factors (13) for discrete operating points (16) of the internal combustion engine (1), wherein
   c) a distance ($d_{GM}$) between the current operating point (15) and the discrete operating point (16) of the relevant grid correction factor ($K_{GA}$) that is to be adjusted is taken into account during adjustment of the grid correction factors ($K_{GA}$),
   d) updated grid correction factors ($K_{GN}$) that are stored in the characteristic diagram of correction factors (13) once adjustment has taken place are used to determine an updated correction factor ($K_{MN}$) for the current operating point (15), and the updated correction factor ($K_{MN}$) is used for injection, **characterized in that**

e) a frequency ($H_{MA}$) of the current operating point (15) and a grid frequency ($H_{GA}$) of the discrete operating point (16) of the relevant grid correction factor ($K_{GA}$) that is to be adjusted, which grid frequency is stored in a characteristic diagram of discrete frequencies (14), are taken into account during adjustment of the grid correction factors ($K_{GA}$), wherein the grid frequencies are numbers indicating how many times the associated discrete operating state has occurred so far,

f) that the grid frequencies ($H_{GA}$) of the discrete operating points (17, 18, 19, 20) that are adjacent to the current operating point (15) are used to interpolate the frequency ($H_{MA}$) of the current operating point (15).

2. A method according to claim 1, **characterized in that** the grid correction factors ($K_{GA}$) of the discrete operating points (17, 18, 19, 20) that are adjacent to the current operating point (15) are used to determine an interpolated correction factor ($K_{MA}$) for the current operating point (15), and said interpolated correction factor is taken into account in the form of a difference between the momentary correction factor ($K_M$) and the interpolated correction factor ($K_{MA}$) during adjustment of the grid correction factors ($K_{GA}$).

3. A method according to claim 1, **characterized in that** the grid frequencies ($H_{GA}$) of the relevant discrete operating points (16) are adjusted within the same adaptation cycle as the grid correction factors ($K_{GA}$).

4. A method according to claim 3, **characterized in that** updated grid frequencies ($H_{GN}$) that are available once adjustment has taken place are subjected to overflow correction.

5. A method according to claim 1, **characterized in that** a uniform value is pre-defined for the grid correction factors ($K_{GA}$) in the beginning.

6. A method according to claim 1, **characterized in that** the distance ($d_{GM}$) between the current operating point (15) and the discrete operating point (16) of the relevant grid correction factor ($K_{GA}$) that is to be adjusted is weighted, in particular by means of a multiplicative weighting factor ($\delta$).

7. A method according to claim 1, **characterized in that** the grid correction factor ($K_{GA}$) of the relevant discrete operating point (16) is adjusted according to the equation:

$$K_{GN} = K_{GA} + \frac{H_{MA}}{(1 + \delta \cdot d_{GM}) H_{GA}} (K_M - K_{MA})$$

wherein $K_{GN}$ represents an updated grid correction factor of the relevant discrete operating point (16), $K_{GA}$ represents a previous grid correction factor of the relevant discrete operating point (16), which previous grid correction factor is stored in the characteristic diagram of correction factors (13) until adjustment takes place, $H_{MA}$ represents a frequency of the current operating point (15), $H_{GA}$ represents a previous grid frequency of the relevant discrete operating point (16), which previous grid frequency is stored in the characteristic diagram of discrete frequencies (14) until adjustment takes place, $d_{GM}$ represents the distance between the current operating point (15) and the relevant discrete operating point (16), $\delta$ represents a weighting factor, $K_M$ represents the momentary correction factor, and $K_{MA}$ represents an interpolated correction factor.

8. A method according to claim 7, **characterized in that** the previous grid frequency ($H_{GA}$) of the relevant discrete operating point (16) is adjusted according to the equation:

$$H_{GN} = H_{GA} + \frac{1}{(1 + \delta \cdot d_{GM})}$$

wherein $H_{GN}$ represents an updated grid frequency of the relevant discrete operating point (16).

**Revendications**

1. Procédé de fonctionnement d'un moteur à combustion interne (1) avec plusieurs cylindres (2, 3, 4, 5) dans lesquels s'effectue respectivement une injection de carburant, dans lequel

a) un facteur de correction instantané ($K_M$) pour l'injection dans un des cylindres (2, 3, 4, 5) est déterminé, au moyen d'un signal de vitesse de rotation mesuré d'un arbre (6), pour un point de fonctionnement actuel (15) défini par deux grandeurs d'état ($x_M$, $y_M$) du moteur à combustion interne (1),

b) au moins une partie de facteurs de correction de grille ($K_{GA}$) enregistrés dans un champ caractéristique de facteurs de correction (13) pour des points de fonctionnement discrets (16) du moteur à combustion interne (1) est adaptée au moyen du facteur de correction instantané ($K_M$),

c) un intervalle ($d_{GM}$) entre le point de fonctionnement (15) actuel et le point de fonctionnement discret (16) du facteur de correction de grille ($K_{GA}$) à adapter respectivement étant pris en compte lors de l'adaptation des facteurs de correction de grille ($K_{GA}$),

d) un facteur de correction actualisé ($K_{MN}$) pour le point de fonctionnement actuel (15) étant déterminé au moyen de facteurs de correction de grille actualisés ($K_{GN}$) enregistrés après l'adaptation dans le champ caractéristique de facteurs de correction (13), et le facteur de correction actualisé ($K_{MN}$) étant utilisé pour l'injection,

**caractérisé en ce que**

e) lors de l'adaptation des facteurs de correction de grille ($K_{GA}$), une fréquence ($H_{MA}$) du point de fonctionnement actuel (15) et une fréquence de grille ($H_{GA}$) du point de fonctionnement discret (16) du facteur de correction de grille ($K_{GA}$) à adapter respectivement, enregistrée dans un champ caractéristique de fréquence discret (14), sont prises en compte lors de l'adaptation des facteurs de correction de grille ($K_{GA}$), les fréquences de grille reproduisant des valeurs de mesure indiquant combien de fois l'état de fonctionnement discret correspondant est survenu jusqu'à présent,

f) et **en ce que** la fréquence ($H_{MA}$) du point de fonctionnement actuel (15) est interpolée au moyen des fréquences de grille ($H_{GA}$) des points de fonctionnement discrets (17, 18, 19, 20) voisins du point de fonctionnement actuel (15).

2. Procédé selon la revendication 1, **caractérisé en ce que**, pour le point de fonctionnement actuel (15), un facteur de correction interpolé ($K_{MA}$) est déterminé au moyen des facteurs de correction de grille ($K_{GA}$) des points de fonctionnement discrets (17, 18, 19, 20) voisins du point de fonctionnement actuel (15), et est pris en compte, lors de l'adaptation des facteurs de correction de grille ($K_{GA}$), sous la forme d'une différence entre le facteur de correction instantané ($K_M$) et le facteur de correction interpolé ($K_{MA}$).

3. Procédé selon la revendication 1, **caractérisé en ce que** les fréquences de grille ($H_{GA}$) des points de fonctionnement discrets (16) respectifs sont adaptées dans un même cycle d'adaptation que les facteurs de correction de grille ($K_{GA}$).

4. Procédé selon la revendication 3, **caractérisé en ce que**, après l'adaptation, des fréquences de grille actualisées ($H_{GN}$) présentes sont soumises à une correction de dépassement.

5. Procédé selon la revendication 1, **caractérisé en ce qu'**une valeur uniforme est pré-affectée aux facteurs de correction de grille ($K_{GA}$).

6. Procédé selon la revendication 1, **caractérisé en ce que** l'intervalle ($d_{GM}$) entre le point de fonctionnement actuel (15) et le point de fonctionnement discret (16) du facteur de correction de grille ($K_{GA}$) à adapter respectivement est pondéré en particulier au moyen d'un facteur de pondération multiplicatif ($\delta$).

7. Procédé selon la revendication 1, **caractérisé en ce que** le facteur de correction de grille ($K_{GA}$) du point de fonctionnement discret (16) respectif est adapté conformément à l'équation :

$$K_{GN} = K_{GA} + \frac{H_{MA}}{(1 + \delta \cdot d_{GM})H_{GA}}(K_M - K_{MA})$$

,

$K_{GN}$ désignant un facteur de correction de grille actualisé du point de fonctionnement discret (16) respectif, $K_{GA}$ un facteur de correction de grille, préexistant et enregistré pour l'adaptation dans le champ caractéristique de facteurs de correction (13), du point de fonctionnement discret (16) respectif, $H_{MA}$ une fréquence du point de fonctionnement actuel (15), $H_{GA}$ une fréquence de grille, préexistante et enregistrée pour l'adaptation dans le champ caractéristique de fréquence discret (14), du point de fonctionnement discret (16) respectif, $d_{GM}$ l'intervalle entre le point de fonc-

9

tionnement actuel (15) et le point de fonctionnement discret (16) respectif, $\delta$ un facteur de pondération, $K_M$ le facteur de correction instantané, et $K_{MA}$ un facteur de correction interpolé.

8. Procédé selon la revendication 7, **caractérisé en ce que** la fréquence de grille ($H_{GA}$) préexistante du point de fonctionnement discret (16) respectif est adaptée conformément à l'équation :

$$H_{GN} = H_{GA} + \frac{1}{(1 + \delta \cdot d_{GM})} \quad ,$$

$H_{GN}$ désignant une fréquence de grille actualisée du point de fonctionnement discret (16) respectif.

Fig. 1

Fig. 2

EP 1 789 666 B1

**IN DER BESCHREIBUNG AUFGEFÜHRTE DOKUMENTE**

**In der Beschreibung aufgeführte Patentdokumente**

- DE 10235665 A1

- DE 10044412 A1